(19) Europäisches Patentamt
European Patent Office
Office européen des brevets

(11) **EP 2 621 111 B1**

(12) **EUROPÄISCHE PATENTSCHRIFT**

(45) Veröffentlichungstag und Bekanntmachung des Hinweises auf die Patenterteilung:
**20.04.2016 Patentblatt 2016/16**

(51) Int Cl.:
***H04B 10/114*** *(2013.01)*

(21) Anmeldenummer: **13152787.1**

(22) Anmeldetag: **25.01.2013**

(54) **System zur optischen Freiraum-Datenkommunikation basierend auf diskreten Leistungspegeln**

System for the optical communication of data in free spaces based on discrete power levels

Système destiné à la communication optique de données d'espace libre basé sur des niveaux de puissance discrets

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.01.2012 DE 102012001398**

(43) Veröffentlichungstag der Anmeldung:
**31.07.2013 Patentblatt 2013/31**

(73) Patentinhaber: **Airbus Defence and Space GmbH**
**85521 Ottobrunn (DE)**

(72) Erfinder:
• **Fath, Thilo**
**81549 München (DE)**
• **Blümm, Christian**
**81539 München (DE)**
• **Schalk, Josef**
**84051 Altheim (DE)**
• **Schmitt, Nikolaus Peter**
**85649 Brunnthal-Otterloh (DE)**
• **Heller, Christoph**
**82024 Taufkirchen (DE)**

(74) Vertreter: **Rasch, Michael**
**Rösler - Rasch - van der Heide & Partner**
**Patent- und Rechtsanwälte PartG mbB**
**Bodenseestrasse 18**
**81241 München (DE)**

(56) Entgegenhaltungen:
WO-A1-2008/001262    US-A1- 2002 126 338
US-A1- 2006 056 855    US-A1- 2010 254 714
US-B1- 6 775 480

• **HRANILOVIC S ET AL: "Short-range wireless optical communication using pixelated transmitters and imaging receivers", 2004 IEEE INTERNATIONAL CONFERENCE ON COMMUNICATIONS ; ICC 2004 ; 20 - 24 JUNE 2004, PARIS, IEEE OPERATIONS CENTER, PISCATAWAY, NJ, USA, Bd. 2, 20. Juni 2004 (2004-06-20), Seiten 891-895, XP010710441, ISBN: 978-0-7803-8533-7**

**Beschreibung**

Die Erfindung betrifft ein System zur optischen Freiraum-Datenkommunikation mittels digitaler Signale zwischen einer optischen Sendevorrichtung und einem optischen Empfänger durch modulierte optische Strahlung mittels einer Emitteranordnung, die Strahlung in mehreren Stufen unterschiedlicher Strahlungsleistungen emittiert, wobei der Informationsträger durch die Strahlungsleistung der emittierten Strahlung gebildet ist.

Moderne mobile Datenverarbeitungssysteme erfordern hohe Datenübertragungsbandbreiten für Anwendungen wie Internetzugang oder für qualitativ hochwertiges Audio- und/ oder Videostreaming. Gegenwärtig erfolgt die Datenübertragung vornehmlich im Radiofrequenzband (RF), jedoch führt die zunehmende Anzahl derartiger Datenübertragungssysteme zu einer zunehmenden Ausschöpfung der verfügbaren Frequenzbänder. Daher werden Anstrengungen unternommen, eine solche Datenübertragung mittels optischer Freiraum-Datenkommunikationssysteme zu realisieren. Dabei erfolgt die Datenübertragung zwischen einem optischen Sender und einem optischen Empfänger durch die Modulation der vom Sender emittierten Strahlungsleistung (oder optischer Ausgangsleistung bzw. Lichtintensität). Dabei wird vornehmlich eine direkte Sichtverbindung zwischen Sender und Empfänger ausgenutzt. Es ist aber auch möglich, eine optische Übertragung über Streulicht zu realisieren. Ein weiterer Vorteil solcher optischer Freiraum-Datenkommunikationssysteme besteht darin, dass strenge Anforderungen an die elektromagnetische Verträglichkeit (EMC) eingehalten werden können, wie beispielsweise in Krankenhäusern oder sensitiven Industrieanlagen.

Die einfachste Art der optischen Datenübertragung ist die binäre Datenübertragung durch eine gepulste Strahlungsquelle, also das An- und Ausschalten der Strahlungsquelle bzw. ein Betrieb mit zwei verschiedenen Lichtintensitäten. Damit lässt sich jedoch nur eine beschränkte Datenrate realisieren. Auch haben solche Systeme Probleme mit Mehrwegempfangseffekten bei diffusen Übertragungsverhältnissen.

Demgegenüber ist das sog. orthogonale Frequenzmultiplexverfahren (OFDM, orthogonal frequency division multiplexing) ein geeignetes Übertragungsverfahren, mit dem sich selbst bei Mehrwegempfangssituationen hohe Übertragungsraten erzielen lassen. Ein wesentlicher Nachteil dieses Verfahrens ist die Notwendigkeit, dass komplexe Sendeeinrichtungen (sei es im Funk- oder optischen Bereich) mit sehr hoher Linearität und einem großen Dynamikumfang eingesetzt werden müssen. Zur optischen Freiraumübertragung werden im Allgemeinen Laserdioden oder LEDs im sichtbaren oder infraroten Bereich verwendet, weil nur diese schnell genug sind, um einen mit mehreren MHz modulierten elektrischen Strom in eine modulierte Strahlungsleistung zu konvertieren. Der wesentliche Nachteil von LEDs besteht darin, dass die Relation zwischen emittierter Strahlungsleistung und elektrischem Strom hochgradig nicht-linear ist. Insbesondere in Verbindung mit dem OFDM-Verfahren sind die resultierenden Nichtlinearitäten problematisch und führen zu schlechten Signal/Rausch-Verhältnissen (SNR) bzw. schlechten SINR-Verhältnissen (Signal to Interference plus Noise Ratio) und dementsprechend zu einer reduzierten Übertragungsqualität, wenn nicht aufwändige technische Maßnahmen zur Linearisierung unternommen werden. Darüber hinaus benötigen solche herkömmlichen Sendevorrichtungen Digital-Analog-Wandler und Transkonduktanzverstärker, die bei hoher Frequenz und Bandbreite eine geringe Energieeffizienz aufweisen.

Aus der DE 10 2007 043 255 A1 ist eine gattungsgemäße Anordnung bekannt, bei der so viele Strahlungsemitter vorhanden sind wie diskrete zu übertragende Werte. Beispielsweise bei Übertragung eines 8-bit-Signals sind dies 255 Emitter.

Aus der US 2009/0297167 A1, der US 2002/0126338, der US 6 775 480 B1 und der WO 2008/001262 A1 sind Systeme zur optischen Datenkommunikation mit einer Sendevorrichtung sowie einem optischen Empfänger bekannt, bei dem die Sendevorrichtung einen Modulator zur Veränderung der emittierten Strahlung umfasst.

Aufgabe der Erfindung ist es daher, obige Nachteile zu vermeiden und eine Sendevorrichtung zur optischen Freiraum-Datenkommunikation bereitzustellen, die mit geringem baulichen Aufwand herstellbar und einem geringen Energieverbrauch betreibbar ist.

Die Lösung dieser Aufgabe ergibt sich aus den Merkmalen des Anspruchs 1. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Insbesondere wird die Aufgabe dadurch gelöst, dass eine Sendevorrichtung zur optischen Freiraum-Datenkommunikation mit einem optischen Empfänger durch modulierte optische Strahlung mittels einer Emitteranordnung bereitgestellt wird, welche die Strahlung in mehreren Stufen unterschiedlicher Strahlungsleistungen emittiert. Hierbei wird der Informationsträger durch die Leistung der emittierten Strahlung gebildet. Die beschriebene Emitteranordnung umfasst mehrere an/ausschaltbare Emitterelemente, die parallel in Emittergruppen jeweils zur Emission fester unterschiedlicher Strahlungsleistungen ansteuerbar sind, wobei die gesamte von der Emitteranordnung emittierte Strahlungsleistung durch die Summe der emittierten Strahlungsleistungen aller Emitterelemente gebildet wird. Dabei ist zur Übertragung eines Bitvektors ($b_0 \ldots b_n$) jedem Bit eine Emittergruppe zugeordnet, wobei die dem höchstwertigen Bit $b_0$ zugeordnete Emittergruppe eine Maximalstrahlungsleistung $P_{max}$ emittiert und die den geringerwertigen Bits ($b_1 \ldots b_n$) des Bitvektors zugeordneten Emittergruppen folgende Strahlungsleistungen emittieren:

$$P_x = P_{max} / 2^x \text{ mit } x = 1...n.$$

Auf diese Weise lässt sich baulich einfach eine Übertragung digitaler Daten mittels analoger Übertragung elektromagnetischer Wellen (Lichtwellen) erreichen, die eine sehr hohe Linearität aufweist. Mit anderen Worten lässt sich ein hochlinearer Digital-Analog-Wandler realisieren, der auf der Grundlage eines digitalen Eingangssignals eine analoge Lichtintensität emittiert.

Diese Lösung ermöglicht vorteilhafterweise die Ausnutzung des vollen Dynamikbereichs von LEDs oder Laserdioden, was zu einer wirtschaftlicheren Nutzung der Sendeleistung führt. Ferner werden Kosten und Komplexität der Sendeeinrichtung erheblich reduziert, da weder Digital-Analog-Wandler noch komplexe ausreichend schnelle Stromregeleinrichtungen erforderlich sind. Nachdem systembedingt die Nichtlinearitätsproblematik behoben ist, entfallen komplexe Linearisierungsschaltungen und Entzerrungstechniken, wodurch eine kostengünstige und baulich einfache Sendevorrichtung ermöglicht wird. Schließlich wird aufgrund der behobenen Nichtlinearitätsproblematik das Signal-Rausch-Verhältnis bei der optischen Datenübertragung verbessert, wodurch der Datendurchsatz und/oder der Übertragungsbereich vergrößert werden kann.

Gemäß einer vorteilhaften Weiterbildung der Erfindung besteht jede der Emittergruppen aus einer oder mehreren Leuchtdioden (LEDs) oder Laserdioden, die vorzugsweise in Reihe geschaltet sind, um die Strahlungsleistung zu erhöhen. Dabei können diese im sichtbaren oder infraroten Bereich strahlen.

Gemäß einer vorteilhaften Weiterbildung der Erfindung wird jede der Emittergruppen zur Emission verschiedener Strahlungsleistungen mit unterschiedlichen optischen Ausgangsleistungen betrieben. Dabei können entweder eine gleiche Anzahl an Emittern zu einer Gruppe zusammengefasst und je nach Gruppe mit unterschiedlichen elektrischen Strömen betrieben werden, oder aber eine unterschiedliche Anzahl an Emittern je Gruppe mit jeweils gleichen elektrischen Strömen betrieben werden. Die elektrischen Ströme können beispielsweise über angepasste Vorwiderstände oder Konstantstromeinrichtungen bereitgestellt werden. Diese Ausprägung der Sendevorrichtung ist zum Beispiel bei Verwendung der Modulationsart OFDM vorteilhaft.

Gemäß einer vorteilhaften Weiterbildung der Erfindung weist jede der Emittergruppen zur Emission verschiedener Strahlungsleistungen eine unterschiedliche Anzahl an Emittern auf. Beispielsweise kann eine Emittergruppe nur aus einem Emitter, eine andere aus zwei, eine aus vier Emittern etc. bestehen.

Gemäß einer vorteilhaften Weiterbildung der Erfindung weisen zumindest einzelne der Emittergruppen zur Emission unterschiedlicher Strahlungsleistungen unterschiedliche Emittertypen auf, die unterschiedliche Strahlungsleistungen emittieren. Auf diese Weise lässt sich mit geringem baulichem Aufwand ein optimaler Betrieb der Emitterelemente erreichen, die sehr unterschiedliche Strahlungsleistungen aufweisen.

Gemäß einer alternativen vorteilhaften Weiterbildung der Erfindung sind die optischen Ausgangsleistungen der einzelnen Emittergruppen jeweils gleich groß. In diesem Fall werden verschiedene Anzahlen an Emittergruppen (z.B. 1, 2, 4, 8, ...) logisch zusammengefasst und gemeinsam als zusammengefasste Gruppe über die jeweiligen einzelnen Bits ($b_0$ ...$b_n$) des Bitvektors an- und ausgeschaltet. Die einzelnen Gruppen werden also nochmals zu Übergruppen zusammengefasst, die gemeinsam an-/ausgeschaltet werden. Beispielsweise besteht eine erste Übergruppe Ü1 aus einer Emittergruppe, eine zweite Übergruppe Ü2 aus zwei Emittergruppen, eine dritte Übergruppe Ü3 aus vier Emittergruppen, u.s.w. Hierdurch ergibt sich wiederum eine Abstufung gemäß $P_X = P_{max} / 2^x$. Der Vorteil dabei ist, dass alle Emittergruppen baugleich sein können, also die einzelnen Vorwiderstände können alle identisch sein und müssen nicht aneinander angepasst werden, um $P_x = P_{max} / 2^x$ zu realisieren. Diese Lösung reduziert also den Implementierungsaufwand. Außerdem kann in diesem Fall auf eine Feinjustierung der optischen Sendeleistungen der einzelnen Emittergruppen wie oben aufgeführt verzichtet werden.

Gemäß einer alternativen vorteilhaften Weiterbildung der Erfindung sind die optischen Ausgangsleistungen der einzelnen Emittergruppen jeweils ebenfalls gleich groß, werden allerdings nicht zu weiteren logischen Gruppen zusammengefasst. In diesem Fall werden die zu übertragenden Daten durch die Anzahl der aktiven Emittergruppen repräsentiert. Hierzu bestimmt die Dezimaldarstellung des Bitvektors ($b_0$ ...$b_n$) die Anzahl der anzuschaltenden Emittergruppen: z.B. entspräche der Bitvektor "1 0 1 1" einer "11", sodass folglich 11 Emittergruppen aktiviert würden. Diese Ausprägung der Sendevorrichtung eignet sich insbesondere für das Modulationsverfahren PAM (pulse amplitude modulation).

Gemäß einer vorteilhaften Weiterbildung der Erfindung sind die Emitter der Emittergruppen in einer Matrix angeordnet, wobei zu einer Emittergruppe gehörende Emitter in einer Matrix-Diagonalen oder Parallelen dazu angeordnet sind. Damit lässt sich für die Gesamtheit der abgestrahlten Lichtintensität eine gute Homogenität weitgehend unabhängig davon erreichen, welche der Emittergruppen an- und welche abgeschaltet sind.

Gemäß einer alternativen vorteilhaften Weiterbildung der Erfindung befinden sich die Emitter in mehreren zueinander konzentrischen Polygonalanordnungen. Dabei bilden vorzugsweise die Emitter des mit der höchsten Strahlungsleistung betriebenen Emittergruppe eine innere Polygonalanordnung, und die Emitter der mit geringeren Strahlungsleistungen betriebenen Emittergruppen bilden miteinander alternierend mindestens einen äußeren und gegebenenfalls weitere äußere Polygonalanordnungen aus. Auch mit dieser Ausbildung lässt sich für die Gesamtheit der abgestrahlten Lichtintensität eine gute Homogenität weitgehend unabhängig davon erreichen, welche der Emittergruppen an- und welche abgeschaltet sind.

Gemäß einer vorteilhaften Weiterbildung der Erfindung wird eine Sendevorrichtung zur optischen Freiraum-Datenkommunikation bereitgestellt, die eine Sendevorrichtung nach einer der vorbeschriebenen Ausführungsformen umfasst, wobei die Vorrichtung eine Ansteuerbandbreite von 5 bis 50 MHz aufweist.

Gemäß einer vorteilhaften Weiterbildung der Erfindung wird bei der Sendevorrichtung das OFDM-Modulationsverfahren (orthogonal frequency division multiplexing) oder das OFDMA-Modulationsverfahren (orthogonal frequency division multiple access) angewandt. Beide Verfahren erlauben sehr hohe Datenübertragungsraten. Alternativ können auch andere auf verschiedenen Intensitätsstufen basierende Modulationsverfahren zur Anwendung kommen.

Gemäß einer vorteilhaften Weiterbildung der Erfindung wird bei der Sendevorrichtung das CDMA-Übertragungsverfahren (code division multiple access) oder eine Abwandlung davon verwendet.

Gemäß einer vorteilhaften Weiterbildung der Erfindung wird bei der Sendevorrichtung das Modulationsverfahren PAM (pulse amplitude modulation) oder ein anderes auf verschiedenen Intensitätsstufen basierendes Modulationsverfahren verwendet. Dies hat den Vorteil einer einfachen Implementierung und Umsetzbarkeit der digitalen Signalverarbeitung auf Sender- und Empfängerseite.

Gemäß einer vorteilhaften Weiterbildung der Erfindung werden bei der Sendevorrichtung Einträger-Modulationsverfahren wie PSK (Phase Shift Keying) oder GMSK (Gaussian Minimum Shift Keying) verwendet. Diese bieten den Vorteil einer konstanten Einhüllenden des Sendesignals, sodass sich keine Problematik bzgl. Peak-to-Average-Power-Ratio (PAPR), wie etwa bei OFDM ergibt.

Gemäß einer vorteilhaften Weiterbildung der Erfindung sind die Emitterelemente Leuchtdioden (LEDs). Gemäß eine anderen vorteilhaften Weiterbildung werden als Emitterelemente Laserdioden verwendet. Grundsätzlich können als Emitterelemente beliebige andere, auch zukünftige optische Strahlungsquellen verwendet werden, insoweit sie die erforderliche Ansteuerbandbreite aufweisen. Bevorzugte Anwendungen der Erfindung sind in einem Luftfahrzeug, Kraftfahrzeug oder im Heim- und Bürobereich.

Weitere Vorteile, Merkmale und Einzelheiten ergeben sich aus der nachfolgenden Beschreibung, in der - unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand der Erfindung. Gleiche, ähnliche und/oder funktionsgleiche Teile sind mit gleichen Bezugszeichen versehen.

Es zeigen:

Figur 1:  eine schematische Übersichtsdarstellung eines optischen Datenübertragungssystems;

Figur 2:  eine schematische Darstellung einer herkömmlichen Sendevorrichtung;

Figur 3:  eine schematische Darstellung einer erfindungsgemäßen Sendevorrichtung;

Figur 4:  eine Darstellung einer ersten Emitteranordnung;

Figur 5:  eine Darstellung einer zweiten Emitteranordnung.

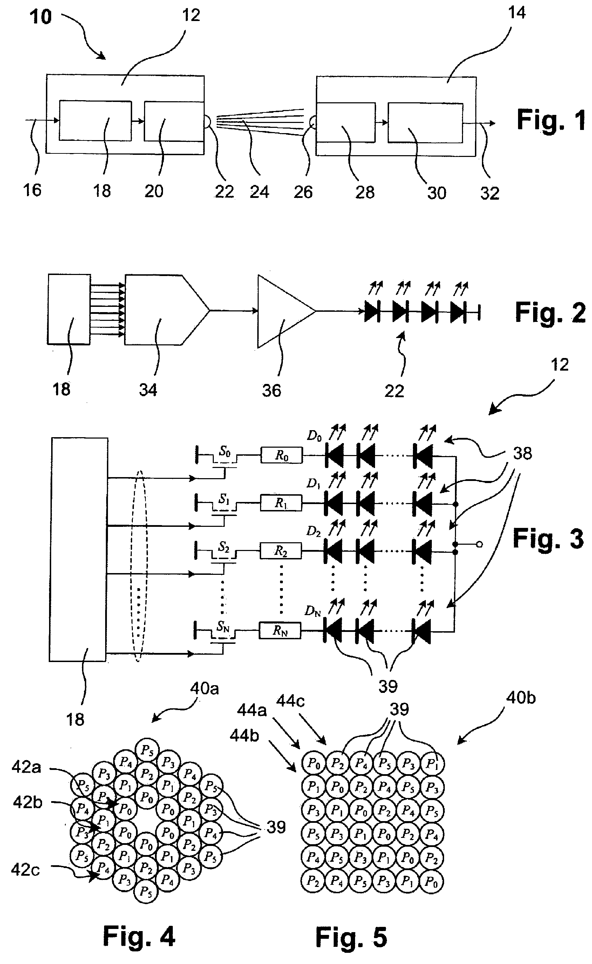

Figur 1 zeigt eine schematische Übersichtsdarstellung eines optischen Datenübertragungssystems 10, umfassend eine Sendevorrichtung 12 und eine Empfangsvorrichtung 14. Der Sendevorrichtung 12 wird ein zu übertragender digitaler Datenstrom 16 zugeführt, der in einen Modulator 18 gelangt, der den Datenstrom 16 in ein Signal wandelt, das mittels eines optischen Strahles übertragen werden kann. Der Ausgang des Modulators 18 ist lediglich ein digitales Signal. Für andere Modulationstechniken als eine An/Aus-Schaltung kann dies ein Sendevektor sein, der einen analogen Signalwert repräsentiert. Eine Sendevorrichtung (Senderoberbau; Front end) 20 transformiert den Sendevektor in ein tatsächliches optisches Signal (eine emittierte Lichtintensität oder Strahlungsleistung) durch Steuerung einer geeigneten Strahlungsquelle 22 (Emitter). Die von der Strahlungsquelle 22 emittierte Strahlung 24 wird von einem geeigneten Stahlungsdetektor 26 aufgefangen, in elektrische Signale umgewandelt und einem Empfangsoberbau 28 zugeführt. Ein Beispiel für einen Strahlungsdetektor 26 ist eine Fotodiode, die optische Leistung in einen elektrischen Strom umwandelt. Der Empfangsoberbau 28 verstärkt und filtert das Empfangssignal und wandelt es anschließend in ein Digitalsignal um, das im sich anschließenden Demodulator 30 verarbeitet wird. Der Demodulator 30 reproduziert den übertragenen Datenstrom und leitet es weiterer Verwendung zu.

Figur 2 zeigt eine schematische Darstellung einer herkömmlichen Sendevorrichtung, bei der das Signal des Modulators 18 mittels eines Digital-Analog-Wandlers 34 in eine Analogspannung umgewandelt wird, die wiederum mittels eines Transkonduktanzverstärkers 36 in ein Stromsignal umgewandelt wird, welches die Strahlungsquelle 22, im dargestellten Beispiel eine LED-Zeile, ansteuert.

In Figur 3 ist eine schematische Darstellung einer erfindungsgemäßen Sendevorrichtung dargestellt, die im Wesentlichen aus einer Anzahl N+1 von Emittergruppen 38 ($D_0$ - $D_N$) besteht. Jede Emittergruppe $D_i$ besteht aus einer Anzahl in Serie geschalteter Strahlungsemitter 39 und wird jeweils mittels eines eigenen Serienwiderstandes Ri auf eine konstante Strahlungsleistung gesetzt. Die Anzahl der in Serie geschalteter Strahlungsemitter 39 kann für jede Emittergruppe 38 un-

terschiedlich sein. Angenommen $P_{max}$ entspricht der maximal möglichen Strahlungsleistung einer Emittergruppe 38, dann wird der Serienwiderstand $R_0$ so eingestellt, dass bei entsprechender Schaltung des Halbleiterschalters $S_0$ diese maximale Strahlungsleistung $P_{max}$ in der Emittergruppe $D_0$ erzeugt wird. Die Emittergruppen $D_1$ - $D_N$ werden mit entsprechend geringen Strömen betrieben, so dass die emittierte Strahlungsleistung in der Emittergruppe $D_1$: $P_1 = P_{max}/2$, in der Emittergruppe $D_2$: $P_2 = P_{max}/4$, in der Emittergruppe $D_N$: $P_N = P_{max}/2^N$ beträgt.

Die Emittergruppe $D_0$ wird mittels des Halbleiterschalters $S_0$ an oder aus geschaltet gemäß dem höchstwertigen Bit des vom Modulator 18 erzeugten Bitvektors. Dementsprechend wird die Emittergruppe $D_1$ mittels des Halbleiterschalters $S_1$ gemäß dem zweithöchstwertigen Bit des Bitvektors geschaltet. Analog gilt dies für die anderen Emittergruppen $D_2$ - $D_N$. Dementsprechend verhält sich die in Figur 3 dargestellte Schaltung wie ein direkter Digitaleingang-zu-Analogausgang-Konverter mit einer Auflösung von N+1 Bits. Dabei kann N gemäß der gewünschten Auflösung beliebig gewählt werden.

Geeignet sind Werte für N von 2 bis 10.

Dabei sollten die Strahlungsleistungen der einzelnen Emittergruppen 38 durch Einstellung der entsprechenden Serienwiderstände $R_i$ sehr genau justiert werden, z.B. unter Verwendung eines optischen Strahlungsmessers, damit die überlagerte Strahlung aller Emittergruppen 38 eine größtmögliche Linearität aufweist.

Die verwendeten Halbleiterschalters $S_0$ bis $S_N$ sollten schnelle Festkörperschalter sein, wie Transistoren oder MOSFET-Schalter.

Beispielsweise zur Übertragung eines Bitvektors (0,1,0,1,1,0,0,1), d.h. in diesem Bespiel ist N=7 angenommen, sind die Halbleiterschalter $S_0$, $S_2$, $S_5$, $S_6$ gesperrt, d.h. offen, während die verbleibenden Halbleiterschalter $S_1$, $S_3$, $S_4$, $S_7$ leitend sind und dementsprechend durch die Emittergruppen $D_1$, $D_3$, $D_4$, $D_7$ Strom fließt und diese jeweils Licht vorgegebener individueller Intensitäten emittieren. Die Gesamtheit der durch die Emittergruppen $D_1$, $D_3$, $D_4$, $D_7$ emittierten Strahlung ist dabei proportional zum analogen Wert des Bitvektors. Anschließend werden zur Übertragung des nächsten Bitvektors die entsprechenden Emittergruppen leitend geschaltet bzw. gesperrt. Vorzugsweise erfolgt die Datenübertragung mit einer Bandbreite bzw. Schaltfrequenz der Halbleiterschalter von ca. 5 bis 100 MHz.

Figur 4 zeigt eine erste Emitteranordnung 40a für einen 6-Bit-Vektor, die aus einzelnen Leuchtdioden oder Laserdioden aller Emittergruppen 38 besteht. Diese Emitteranordnung 40a besteht aus mehreren konzentrischen Polygonalanordnungen (hier Hexagonalanordnungen) 42a, 42b, 42c von LEDs. Dabei sind in der innersten Hexagonalanordnung 42a die sechs LEDs der Emittergruppe $D_0$ mit der Leistung $P_0$ angeordnet. In der außerhalb davon angeordneten zweiten Hexagonalanordnung 42b sind die 12 LEDs der Emittergruppen $D_1$

und $D_2$ mit der jeweiligen Leistung $P_1$ und $P_2$ angeordnet. In der außerhalb davon angeordneten dritten Hexagonalanordnung 42c sind die 18 LEDs der Emittergruppen $D_3$, $D_4$ und $D_5$ mit deren jeweiligen Leistungen $P_3$, $P_4$ und $P_5$ angeordnet.

Weitere Polygonalanordnungen mit weiteren Emittern können weiter außen vorgesehen werden. Dabei sollten vorzugsweise Emitter mit weitem Strahlungswinkel zum Einsatz kommen.

Figur 5 zeigt eine zweite Emitteranordnung 40b, die ebenfalls aus einzelnen Leuchtdioden oder Laserdioden aller Emittergruppen 38 besteht. Bei dieser Emitteranordnung 40b bilden die sechs Emitter der Emittergruppe $D_0$ mit der Leistung $P_0$ eine Diagonale 44a einer Matrix bzw. eines Rechtecks oder Quadrats aus einzelnen Emittern. Weiterhin bilden fünf Emitter der Emittergruppe $D_1$ mit Leistung $P_1$ eine Reihe 44b parallel neben der Diagonalen 44a, sowie fünf weitere Emitter der Emittergruppe $D_2$ mit Leistung $P_2$ eine weitere Reihe 44c parallel auf der anderen Seite der Diagonalen 44a und so weiter, wobei die verbleibenden Emitter der einzelnen Gruppen auf zusätzlichen, weiter außen liegenden Diagonalen angeordnet werden.

Bezugszeichenliste

| 10 | Datenübertragungssystem |
|---|---|
| 12 | Sendevorrichtung |
| 14 | Empfangsvorrichtung |
| 16 | Datenstrom |
| 18 | Modulator |
| 20 | Senderoberbau |
| 22 | Strahlungsquelle |
| 24 | Strahlung |
| 26 | Strahlungsdetektor |
| 28 | Empfangsoberbau |
| 30 | Demodulator |
| 32 | Digitalsignal |
| 34 | Digital-Analog-Wandler |
| 36 | Transkonduktanzverstärker |
| 38 | Emittergruppe |
| 39 | Strahlungsemitter |
| 40a,b | Emitteranordnung |
| 42a,b,c | Polygonalanordnung |
| 44a,b,c | Diagonale |

**Patentansprüche**

1. System zur optischen Freiraum-Datenkommunikation mittels digitaler Signale mit einer Sendevorrichtung (12) sowie einem optischen Empfänger (14) unter Verwendung von mehreren unterschiedlichen Stufen emittierter Strahlungsleistungen, wobei die Sendevorrichtung (12) mehrere an/ausschaltbare Emittergruppen (38) umfasst, die parallel jeweils zur Emission fester unterschiedlicher Strahlungsleistungen ansteuerbar sind, wobei die gesamte von der Sendevorrichtung (12) emittierte Strahlungsleistung durch die Summe der emittierten Strahlungsleistungen aller Emittergruppen (38) gebildet ist, **dadurch gekennzeichnet, dass** zur Übertragung eines Bitvektors ($b_0$ ... $b_n$) die dem höchstwertigen Bit ($b_0$) zugeordnete Emittergruppe (38) eine Maximalstrahlungsleistung $P_{max}$ emittiert, und die den geringerwertigen Bits (b1 ... bn) des Bitvektors zugeordneten Emittergruppen (38) folgende Strahlungsleistungen emittieren: $P_x = P_{max} / 2^x$ mit x = 1...n.

2. System nach Anspruch 1, **dadurch gekennzeichnet, dass** jede der Emittergruppen (38) aus einem oder mehreren Emitterelementen (39) gebildet werden, welche aus Leuchtdioden (LEDs), Laserdioden oder einer Mischung beider bestehen.

3. System nach einem oder mehreren der vorherigen Ansprüche , **dadurch gekennzeichnet, dass** einzelne der Emittergruppen (38) zur Emission verschiedener Strahlungsleistungen mit unterschiedlichen elektrischen Strömen bzw. elektrischen Eingangsleistungen betreibbar sind.

4. System nach einem oder mehreren der vorherigen Ansprüche, **dadurch gekennzeichnet, dass** die Ströme der Emittergruppen (38) so gewählt sind, dass die optischen Ausgangsleistungen der einzelnen Emittergruppen (38) jeweils gleich groß sind, wobei die unterschiedlichen Stufen der emittierten gesamten optischen Ausgangsleistung über die Zusammenfassung einzelner Emittergruppen (38) zu logischen Gruppen mit unterschiedlicher Anzahl an einzelnen Emittergruppen oder über die Gesamtzahl der aktivierten Emittergruppen (38) realisiert sind.

5. System nach einem oder mehreren der vorherigen Ansprüche, **dadurch gekennzeichnet, dass** einzelne der Emittergruppen (38) zur Emission verschiedener Strahlungsleistungen eine unterschiedliche Anzahl an Emittern (39) aufweisen.

6. System nach einem oder mehreren der Ansprüche 1 bis 4, **dadurch gekennzeichnet, dass** einzelne der Emittergruppen (38) zur Emission verschiedener Strahlungsleistungen eine gleiche Anzahl an Emittern (39) aufweisen.

7. System nach einem oder mehreren der vorherigen Ansprüche, **dadurch gekennzeichnet, dass** zumindest einzelne der Emittergruppen (38) zur Emission unterschiedlicher Strahlungsleistungen unterschiedliche Typen an Emittern (39) aufweisen, die unterschiedliche Strahlungsleistungen emittieren.

8. System nach einem oder mehreren der vorherigen Ansprüche, **gekennzeichnet dadurch, dass** die Emitterelemente (39) räumlich so angeordnet werden, dass eine maximale Homogenität der abgestrahlten Leistung über den Strahlquerschnitt hinweg erreicht wird.

9. System nach einem oder mehreren der vorherigen Ansprüche, **dadurch gekennzeichnet, dass** die Emitter (39) in einer Matrix angeordnet sind, wobei die zu einem Bit gehörende Emittergruppe in einer Matrix-Zeile oder Matrix-Diagonalen (44) und/oder Parallelen dazu angeordnet sind.

10. System nach Anspruch 1, **dadurch gekennzeichnet, dass** sich die Emitter (39) in mehreren zu einander konzentrischen Polygonalanordnungen (42) befinden.

11. System nach einem oder mehreren der vorherigen Ansprüche, **dadurch gekennzeichnet, dass** die Emitter (39) der mit der höchsten Strahlungsleistung betriebenen Emittergruppe (38) eine innere Polygonalanordnung (42a) bilden, die Emittergruppen (38) mit geringerer Strahlungsleistungen miteinander alternierend bezüglich ihrer Strahlungsleistung im Vergleich zur inneren Polygonalanordnung (42a) (größer/kleiner) mindestens einen äußeren (42b) und gegebenenfalls weitere äußere Polygonalanordnungen (42c) ausbilden.

12. System nach einem oder mehreren der vorherigen Ansprüche, **dadurch gekennzeichnet, dass** dieses eine Ansteuerbandbreite von 5 MHz bis 100 MHz aufweist.

13. System nach einem oder mehreren der vorherigen Ansprüche, **dadurch gekennzeichnet, dass** diese mittels eines Modulationsverfahrens OFDM (orthogonal frequency division multiplexing), OFDMA oder einer Abwandlung davon betreibbar ist.

14. System nach einem oder mehreren der vorherigen Ansprüche, **gekennzeichnet dadurch, dass** dieses mittels eines Modulationsverfahrens PAM (pulse amplitude modulation) oder ein anderes auf verschiedenen Intensitätsstufen basierendes Modulationsverfahren betreibbar ist.

15. System nach einem oder mehreren der Ansprüche 6 bis 14, **dadurch gekennzeichnet, dass** die Emitter (39) Leuchtdioden und/oder Laserdioden sind.

16. Luftfahrzeug mit einer Sendevorrichtung zur optischen Freiraum-Datenkommunikation mit einem optischen Empfänger, **dadurch gekennzeichnet, dass** dieses eine Sendevorrichtung (12) nach einem der vorherigen Ansprüche 1 bis 15 aufweist.

**Claims**

1. System for the optical communication of data in free spaces by means of digital signals, having a transmission device (12), and an optical receiver (14) and using a plurality of different levels of emitted radiation power levels, wherein the transmission device (12) comprises a plurality of emitter groups (38) that can be switched on and off, each of which can be activated in parallel with the emission of different fixed radiation power levels, wherein the whole of the radiation emitted by the transmission device (12) is formed by the sum of the emitted radiation power levels of all emitter groups (38), **characterized in that** to transmit a bit vector ($b_0$ ... $b_n$) the emitter group (38) assigned to the most significant bit (b0) emits a maximum radiation power $P_{max}$, and the emitter groups (38) assigned to the least significant bits (b1 ... bn) of the bit vector emit the following radiation power levels: $P_x = P_{max} / 2^x$ with x = 1 ... n.

2. The system according to Claim 1, **characterized in that** each of the emitter groups (38) is formed from one or more emitter elements (39) which consist of light emitting diodes (LEDs), laser diodes or a mixture of the two.

3. System according to one or more of the previous claims, **characterized in that** individual emitter groups (38) can be operated with different electrical currents or electrical input powers for emitting different radiation power levels.

4. System according to one or more of the previous claims, **characterized in that** the currents of the emitter groups (38) are selected so that the optical output power levels of the individual emitter groups (38) are each equal in size, wherein the different stages of the total emitted optical output power are implemented by the combination of individual emitter groups (38) into logical groups with different numbers of individual emitter groups, or by the total number of the activated emitter groups (38).

5. System according to one or more of the previous claims, **characterized in that** individual emitter groups (38) have a different number of emitters (39) for emitting a range of radiation power levels.

6. System according to one or more of Claims 1 to 4, **characterized in that** individual emitter groups (38) have an equal number of emitters (39) for emitting a range of radiation power levels.

7. System according to one or more of the previous claims, **characterized in that** to emit different radiation power levels at least some of the individual emitter groups (38) have different types of emitters (39) which emit different radiation power levels.

8. System according to one or more of the previous claims, **characterized in that** the emitter elements (39) are spatially arranged in such a way that a maximum homogeneity of the radiated power over the beam cross section is obtained.

9. System according to one or more of the previous claims, **characterized in that** the emitters (39) are arranged in a matrix wherein the emitter group associated with one bit is arranged in a matrix row or matrix diagonal (44) and/or in parallels thereto.

10. The system according to Claim 1, **characterized in that** the emitters (39) are in a plurality of polygonal arrangements (42) concentric to each other.

11. System according to one or more of the previous claims, **characterized in that** the emitters (39) of the emitter groups (38) operated with the highest radiated power form an internal polygonal arrangement (42a), the emitter groups (38) with lower radiation power levels alternating with each other in terms of their radiation power in comparison to the inner polygonal arrangement (42a) (larger/smaller) form at least one outer (42b) and possibly other external polygonal arrangements (42c).

12. System according to one or more of the previous claims, **characterized in that** this has a control bandwidth of 5 MHz to 100 MHz.

13. System according to one or more of the previous claims, **characterized in that** this can be operated by means of an OFDM (Orthogonal Frequency Division Multiplexing) modulation method, OFDMA or a variant thereof.

14. System according to one or more of the previous claims, **characterized in that** this can be operated by means of a PAM (pulse amplitude modulation) modulation method or another modulation method based on different intensity levels.

15. System according to one or more of Claims 6 to 14, **characterized in that** the emitters (39) are light-emitting diodes and/or laser diodes.

16. Aircraft with a transmission device for the optical communication of data in free spaces with an optical receiver, **characterized in that** this comprises a transmission device (12) according to any one of the previous Claims 1 to 15.

## Revendications

1. Système de communication de données d'espace libre optiques au moyen de signaux numériques avec un dispositif d'émetteur (12) ainsi que d'un récepteur optique (14) en utilisant plusieurs puissances de rayonnement émises à des degrés différents, dans lequel le dispositif d'émetteur (12) comprend plusieurs groupes d'émetteur (38) à mettre en service/hors service, qui peuvent être commandés parallèlement à l'émission de différentes puissances de rayonnement fixes différentes, dans lequel la puissance de rayonnement totale émise par le dispositif d'émetteur (12) est formée par la somme des puissances de rayonnement émises de tous les groupes d'émetteurs (38), **caractérisé en ce que** pour transmettre un vecteur de bits ($b_0$...$b_n$) le groupe d'émetteurs (38) coordonné au bit de plus fort poids (b0) émet une puissance de rayonnement maximale $P_{max}$ et les groupes d'émetteurs (38) coordonnés aux bits de plus faible poids (b1...bn) du vecteur de bits émettent les puissances de rayonnement suivantes : $P_x = P_{max} / 2^x$ avec x=1...n.

2. Système selon la revendication 1, **caractérisé en ce que** chacun des groupes d'émetteurs (38) est formé par un ou plusieurs éléments d'émetteurs (39), qui sont constitués de diodes lumineuses (LEDs), diodes laser ou d'un mélange des deux.

3. Système selon une ou plusieurs des revendications précédentes, **caractérisé en ce que** des groupes d'émetteurs (38) peuvent être mis en fonctionnement individuellement afin d'émettre des puissances de rayonnement différentes avec des courants électriques différents, respectivement des puissances d'entrée électriques différentes.

4. Système selon une ou plusieurs des revendications précédentes, **caractérisé en ce que** les courants des groupes d'émetteurs (38) sont sélectionnés de telle sorte que les puissances de sortie optiques des groupes d'émetteurs individuels (38) soient respectivement de grandeur identique, dans lequel les différents degrés de la puissance de sortie optique totale émise sont réalisés en agrégeant des groupes d'émetteurs individuels (38) en groupes logiques avec un nombre différent de groupes d'émetteurs individuels ou sur le nombre total des groupes d'émetteurs activés (38).

5. Système selon une ou plusieurs des revendications précédentes, **caractérisé en ce que** des groupes d'émetteurs (38) présentent individuellement un nombre différent d'émetteurs (39) pour l'émission de puissances de rayonnement différentes.

6. Système selon une ou plusieurs des revendications 1 à 4, **caractérisé en ce que** des groupes d'émetteurs (38) présentent individuellement un nombre identique d'émetteurs (39) pour l'émission de puissances de rayonnement différentes.

7. Système selon une ou plusieurs des revendications précédentes, **caractérisé en ce que** au moins des groupes d'émetteurs (38) présentent individuellement pour l'émission de puissances de rayonnement différentes des types différents d'émetteurs (39), qui émettent des puissances de rayonnement différentes.

8. Système selon une ou plusieurs des revendications précédentes, **caractérisé en ce que** les éléments d'émetteurs (39) sont disposés spatialement de telle sorte qu'une homogénéité maximale de la puissance rayonnée soit atteinte sur la section transversale de rayon.

9. Système selon une ou plusieurs des revendications précédentes, **caractérisé en ce que** les émetteurs (39) sont disposés dans une matrice, dans lequel les groupes d'émetteurs appartenant à un bit sont disposés dans une cellule de matrice ou des diagonales (44) de matrice et/ou parallèles à celle-ci.

10. Système selon la revendication 1, **caractérisé en ce que** les émetteurs (39) se trouvent dans plusieurs agencements polygonaux (42) concentriques les uns par rapport aux autres.

11. Système selon une ou plusieurs des revendications précédentes, **caractérisé en ce que** les émetteurs (39) du groupes d'émetteurs (38) fonctionnant avec la puissance de rayonnement la plus haute forment un agencement polygonal intérieur (42a), les groupes d'émetteurs (38) avec les puissances de rayonnement les plus faibles forment avec les puissances de rayonnement plus faibles alternant les unes avec les autres en ce qui concerne leur puissance de rayonnement comparé à l'agencement polygonal intérieur (42a) (plus grand/plus petit) au moins un agencement polygonal extérieur (42b) et le cas échéant d'autres agencements polygonaux extérieurs (42c).

12. Système selon une ou plusieurs des revendications précédentes, **caractérisé en ce que** celui-ci présente une bande passante de commande de 5 MHz à 100 MHz.

13. Système selon une ou plusieurs des revendications précédentes, **caractérisé en ce que** celui-ci peut être mis en fonctionnement au moyen d'un procédé de modulation OFDM (multiplexage par répartition orthogonale de fréquence), OFDMA ou une variante de ceux-ci.

**14.** Système selon une ou plusieurs des revendications précédentes, **caractérisé en ce que** celui-ci peut être mis en fonctionnement au moyen d'un procédé de modulation PAM (modulation par amplitude d'impulsion) ou un autre procédé de modulation basé sur des degrés d'intensité différentes.

**15.** Système selon une ou plusieurs des revendications 6 à 14, **caractérisé en ce que** les émetteurs (39) sont des diodes lumineuses et/ou diodes lasers.

**16.** Aéronef comportant un dispositif d'émetteur pour la communication de données en espace libre optique avec un récepteur optique, **caractérisé en ce que** celui-ci présente un dispositif émetteur (12) selon une des revendications précédentes 1 à 15.

**Fig. 1**

**Fig. 2**

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007043255 A1
- US 20090297167 A1
- US 20020126338 A
- US 6775480 B1
- WO 2008001262 A1